# EUROPEAN PATENT APPLICATION

(11) **EP 1 353 046 A1**
(43) Date of publication of application: **15.10.2003**
(21) Application number: 03007977.6
(22) Date of filing: 09.04.2003
(51) Int. Cl.: F01N 3/021, F01N 3/022

(54) **Apparatus and method for purifying exhaust gas in an engine**

(30) Priority: 09.04.2002 JP 2002106683
(71) Applicant: NISSAN MOTOR CO., LTD., Yokohama-shi Kanagawa-ken (JP)
(72) Inventor: Tabata, Munehiro, Isehara-shi, Kanagawa (JP)
(74) Representative: Grünecker, Kinkeldey, Stockmair & Schwanhäusser Anwaltssozietät

(57) **Abstract**

The apparatus improves regeneration efficiency of a diesel particulate filter that traps particulate matter, reduces pressure loss caused by the filter, and benefits space of a vehicle. Therefor, the DPF (11) that traps particulate matter having a large diameter is connected to or close to an exhaust manifold (9a) in an engine (1), and the DPF (12) that traps particulate matter having a small diameter is disposed in an exhaust pipe (9b) downstream of the exhaust manifold (9a) and at a location away (under a vehicle floor) from the exhaust manifold (9a).

## Description

### Background of The Invention

### Field of The Invention

The present invention relates to an apparatus for purifying an exhaust gas in an engine and in particular, for trapping and burning particulate matter in the exhaust gas.

### Background Art

In an earlier apparatus for purifying an exhaust gas of an engine, as shown in Japanese Unexamined Patent Publication No. 2001 - 295627, a front filter and a rear filter are disposed in a single filter casing. The front filter has bores adapted to trap particulate matter having a large diameter and the rear filter has bores adapted to trap particulate matter having a small diameter.

### Summary of The Invention

In the above earlier technology the two types of the filters used respectively in the front and in the rear. However, the front filter is positioned adjacent to the rear filter in the filter casing, thereby causing the following problems.

When this filter casing is disposed under a vehicle floor, the particulate matter having a large diameter to be trapped in the front filter do not burn due to low exhaust gas temperature, and regeneration efficiency of the filter deteriorates.

On the other hand, this filter housing has a capacity enough for receiving two filters and therefore, it is difficult to find space enough for positioning the filter casing close to an exhaust manifold having a high exhaust gas temperature in an engine hood. In case where a pressure loss is controlled to be low, particularly for engine output increase, the capacity of the rear filter is required to be large and accordingly, it is more difficult to find space around the engine for attaching the filter casing receiving two filters.

The present invention provides an apparatus for purifying an exhaust gas of an engine to solve the foregoing problems.

Therefore, one aspect of the invention provides an apparatus of disposing a first filter in an upstream side of the exhaust passage to trap particulate matter having at least a first diameter and disposing a second filter in a downstream side of the exhaust passage to trap particulate matter having at least a second diameter, the second diameter smaller than the first diameter.

These and other aspects, and features of this invention will be understood from the following description with accompanying drawings.

### Brief Explanation of The Drawings

Fig. 1 is a system view of an engine showing a first embodiment according to the invention.
Fig. 2 is a view showing a layout of the first embodiment-mounting vehicle.
Fig. 3 is a schematic perspective view of a diesel particulate filter.
Fig. 4 is an enlarged cross section view showing an inner structure of the diesel particulate filter.
Fig. 5 is a view showing a difference between a diesel particulate filter with large mesh size and a diesel particulate filter with small mesh size.
Fig. 6 is a view showing a relation between a distance from the engine and
an exhaust gas temperature.
Fig. 7 is a view showing a relation between a diameter of a particulate matter and oxidizing temperature.
Fig. 8 is a view showing a relation between a capacity of the diesel particulate filter and a pressure loss of the diesel particulate filter.
Fig. 9 is a view showing between a diameter of the particulate matter that can be trapped and the loss of the diesel particulate filter.
Fig. 10 is a view showing a relation between the capacity of the diesel particulate filter, and the diameter of the particulate matter that can be trapped and a tolerance pressure loss.
Fig. 11a is a system view of an engine showing a second embodiment according to the invention.

### Detailed Explanation of the preferred Embodiments

The preferred embodiments according to the invention will be explained with reference to the drawings as follows.

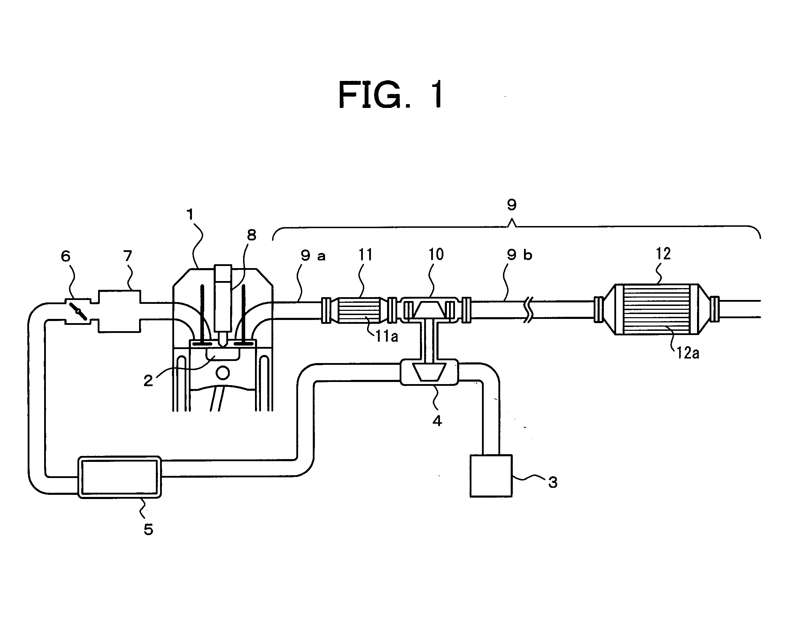

Fig. 1 is a system view of a diesel engine showing a first embodiment of the invention. Air is aspired into a combustion chamber 2 of each cylinder in a diesel engine 1 through an intake system such as an air cleaner 3, an intake compressor 4 of a turbocharger, an intercooler 5, an intake throttle valve 6, and an intake manifold 7. An injector 8 directly injects fuel into combustion chamber 2 where the mixture thereof burns by compression ignition.

An exhaust gas after the combustion is discharged from an exhaust manifold 9a connected to a cylinder head of engine 1 and an exhaust pipe 9b connected thereto, which drives an exhaust turbine 10 of the turbocharger disposed in exhaust pipe 9b.

A particulate filter 11 a with a first mesh size (large mesh size) is contained in a casing 11a that traps particulate matter having a large diameter and a particulate 12a filter with a second mesh size (small mesh size) is contained in a casing 12a that traps particulate matter having a small diameter are separately disposed as a diesel particulate filter (DPF hereinafter) in an exhaust passage where the particulate matter trapped burns in order to purify the particulate matter in the exhaust gas discharged from diesel engine 1. As described later, the bores of the large mesh size are not necessarily larger than the bores of the small mesh size, but the bores of the large mesh size are adapted to trap particulate matter having a larger diameter and the bores of the small mesh size are adapted to trap particulate matter having a small diameter.

DPF 11 a is directly connected to exhaust manifold 9a upstream of exhaust turbine 10. DPF 11 a may be disposed close to exhaust manifold 9a. On the other hand, DPF 12a is positioned in exhaust pipe 9b and at a location away from exhaust manifold 9a (namely, downstream of exhaust turbine 10). An exhaust passage 9 includes exhaust manifold 9a, DPF 11a, exhaust turbine 10 of the turbocharger, DPF 12a, and exhaust pipe 9b.

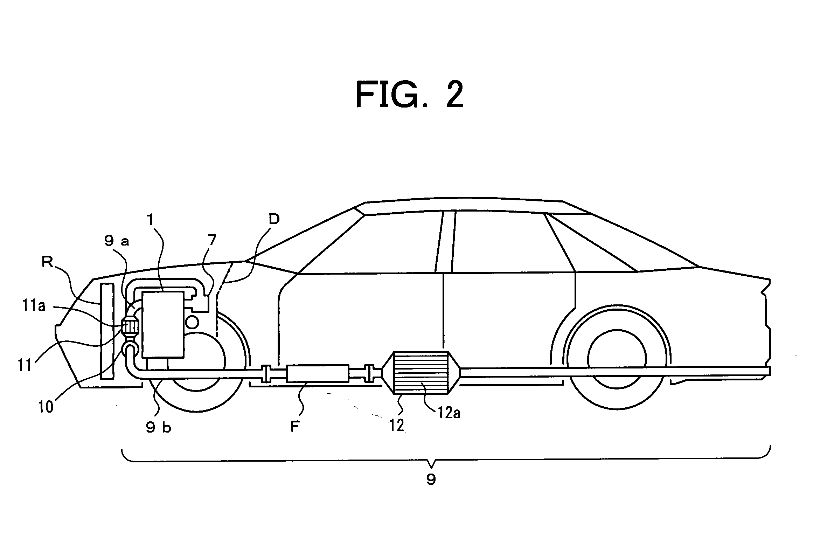

Fig. 2 is a layout view of the first embodiment-mount vehicle where DPF 11a is disposed in an engine hood. D in the figure shows a dash panel that is a partition wall between a front side and a rear side of the engine hood and R in the figure shows a radiator disposed in the front side of the engine hood.

DPF 12a is disposed in the middle of an exhaust pipe 9b extending along and under a vehicle floor from engine 1 toward a vehicle rear side, and a flexible tube F and a ball coupling (not shown) included in exhaust passage 9 are used for its connection.

DPF 11a with the large mesh size and DPF 12a with the small mesh size will be explained in detail. First, the points common in both DPF 11a and DPF 12a will be explained. DPF 11a and DPF 12a both are formed of porous ceramic and honeycomb structure having a circular shape, and received in a cylindrical housing (not shown) through a holding mat.

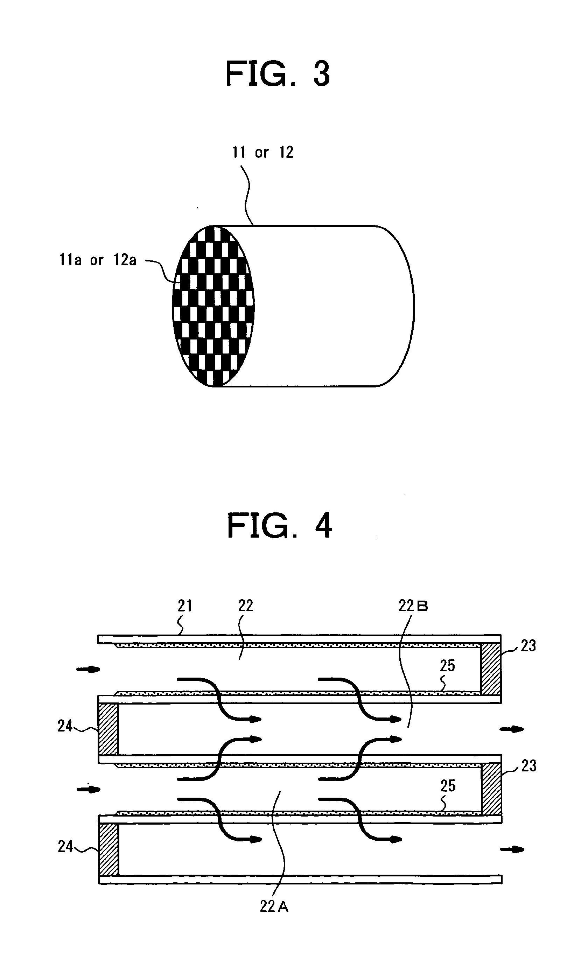

In an inner structure of DPF 11a, 12a, as shown in Fig. 4 showing an enlarged cross section of the honeycomb structure, a plurality of parallel cell spaces 22 are formed being partitioned by porous latticed cell walls 21 made of honeycomb-structure ceramic and each cell space extends toward an exhaust gas flow direction. In relation to neighboring cell spaces, an outlet of one cell space is closed by a sealing member 23 and an inlet of the other neighboring cell space is closed by a sealing member 24 alternately.

Cell space 22 where the inlet is open and the outlet is closed by the sealing member 23 is an exhaust gas - inflow cell space 22A and cell space 22 where the inlet is closed by sealing member 24 and the outlet is open is an exhaust gas - outflow cell space 22B. An exhaust gas from engine 1 flows into cell space 22A and outflows into cell space 22B only through porous cell wall 21 (its air hole). Therefore, cell wall 21 can certainly trap the particulate matter in the exhaust gas.

An inner surface of cell wall 21 facing cell space 22A is coated with a catalyst including precious medals such as Pt, Pd, Rh and the like to form a catalyst layer 25 and thereby, along with trapping the particulate matter in the exhaust gas, due to catalyst effect, oxidization of HC and CO in the exhaust gas is prompted and these HC and CO can be purified. And also the deposited particulate matter can be burned and removed under oxygen in the exhaust gas by the particulate matter being heated due to its reaction heat.

Different points between DPF 11a and DPF 12a will be explained next. DPF 11a with large mesh size can trap the particulate matter in a relatively large diameter and has a relatively small flow resistance and DPF with small mesh size can trap the particulate matter in a relatively small diameter and has a relatively large flow resistance.

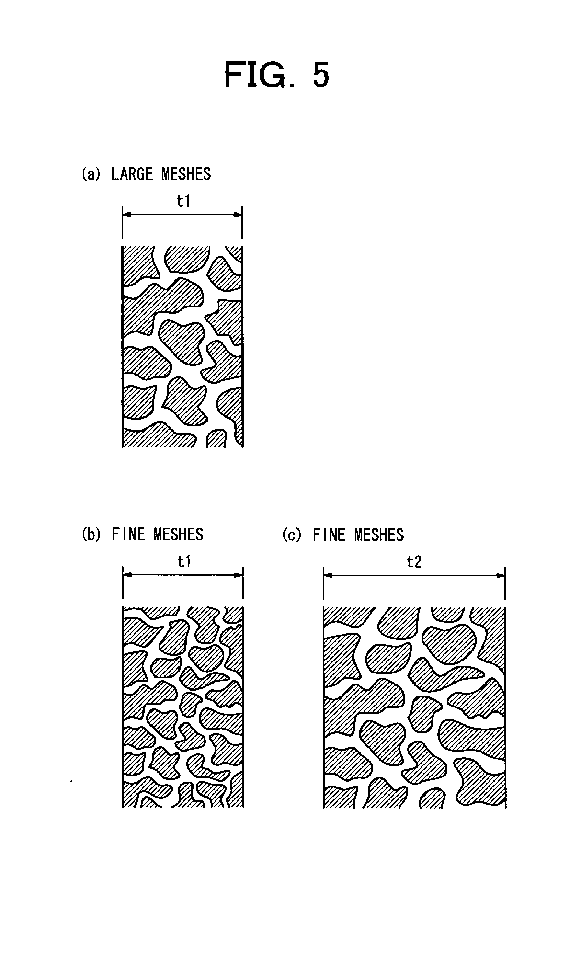

Fig. 5 (a) shows an enlarged cross section view of a lattice cell wall 21 of DPF 11a with the first mesh size and Fig. (b) or(c) shows an enlarged cross section view of lattice cell wall 21 of DPF 12a. Lattice cell wall 21 of DPF 11a, as shown in Fig. 5 (a), can trap the particulate matter in 80 -100 nm of a particle diameter by enlarging an averaging bore diameter of the air bores.

On the other hand, lattice cell wall 21 of DPF 12a with the second mesh size, as shown in Fig. 5 (b), can trap the particulate matter in 20 -50 nm of a particle diameter by reducing an averaging bore diameter of the air bores or, as shown in Fig. 5 (c), can trap the particulate matter by increasing a wall thickness thereof to enlarge a passing length or a contact surface area thereof without changing an averaging bore diameter of the air bores to DPF 11a in Fig. 5 (a). Large mesh size and small mesh size may be formed by selection of a material (fabric ceramic, foam metal) in addition of change of the air bore diameter or the wall thickness.

If a capacity of DPF 11a is V 1 and a capacity of DPF 12a is V 2, V 1 is set as a value less than V 2. When DPF 11a and DPF 12a have the same capacity, and a total capacity of the flow paths in the small mesh size is smaller than in the large mesh size and thereby, the small mesh size have more flow resistance than the large mesh size. Accordingly in order to make the flow resistance or total capacity of the flow paths in DPF 11a to be equal to that of the DPF 12a it is desirable to increase the capacity of DPF 12a with small mesh size compared with DPF 11a with large mesh size. Pressure loss is an important factor and a pressure loss of an engine is determined by the largest pressure loss among pressure resistance factors in the exhaust system and therefore, no difference in the pressure loss between DPF 11a and DPF 12a is preferable.

The effect of the embodiment will be explained. DPF 11a with large mesh size that traps particulate matter in a relatively large diameter is disposed around exhaust manifold 9 and therefore, it is sufficient only if DPF 12a with small mesh size downstream of DPF 11a traps particulate matter in a relatively small diameter.

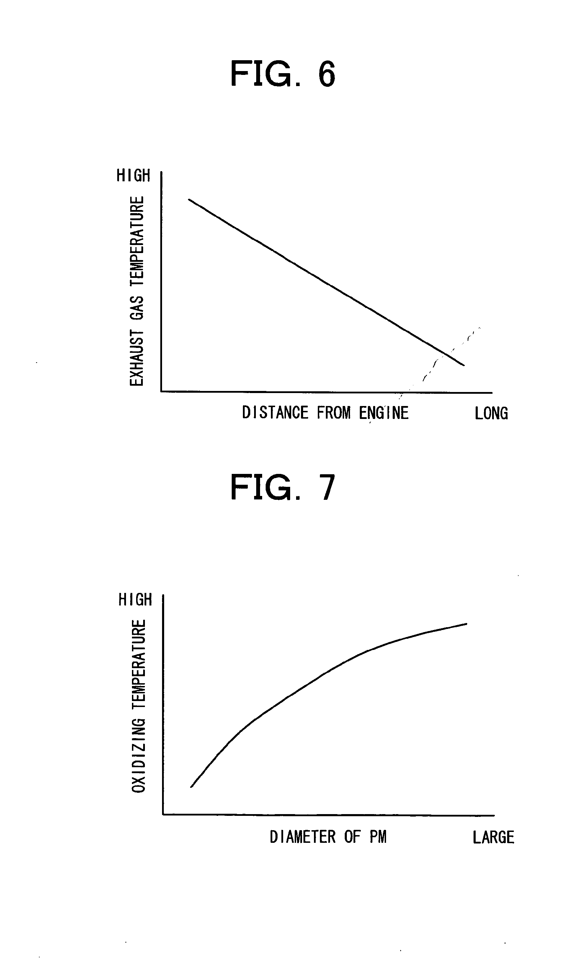

As seen in Fig. 6 showing a relation between a distance from an engine and an exhaust gas temperature, DPF 11a traps particulate matter in a relatively large diameter in the vicinity of exhaust manifold 9 in a high temperature atmosphere and therefore, even if a diameter of the particulate matter trapped is large, the particulate matter can be burned properly, thereby promoting regeneration efficiency.

As seen in Fig. 7 showing a relation between particulate matter diameter and oxidization temperature, as the particulate matter diameter becomes larger, the oxidization temperature is lower and therefore, even when the DPF is positioned under a vehicle body floor away from an engine, the particulate matter can burn.

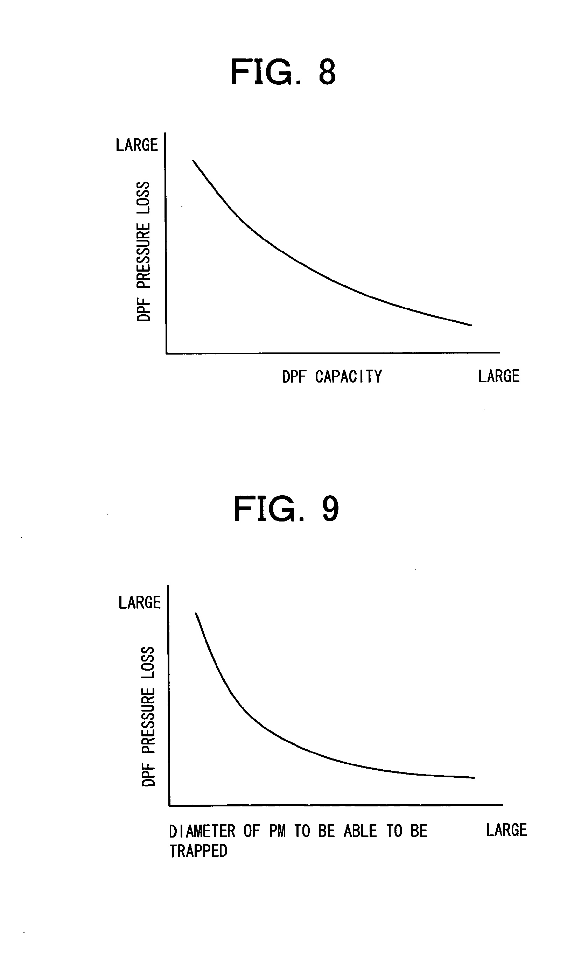

As seen in Fig. 8 showing a relation between DPF capacity and DPF pressure loss, as the DPF capacity becomes larger, the pressure loss becomes smaller. As seen in Fig. 9 showing a relation between a diameter of a particulate matter to be able to be trapped and DPF pressure loss, as a particle diameter to be able to be trapped becomes larger, a flow resistance thereof becomes smaller and thereby the pressure loss becomes small.

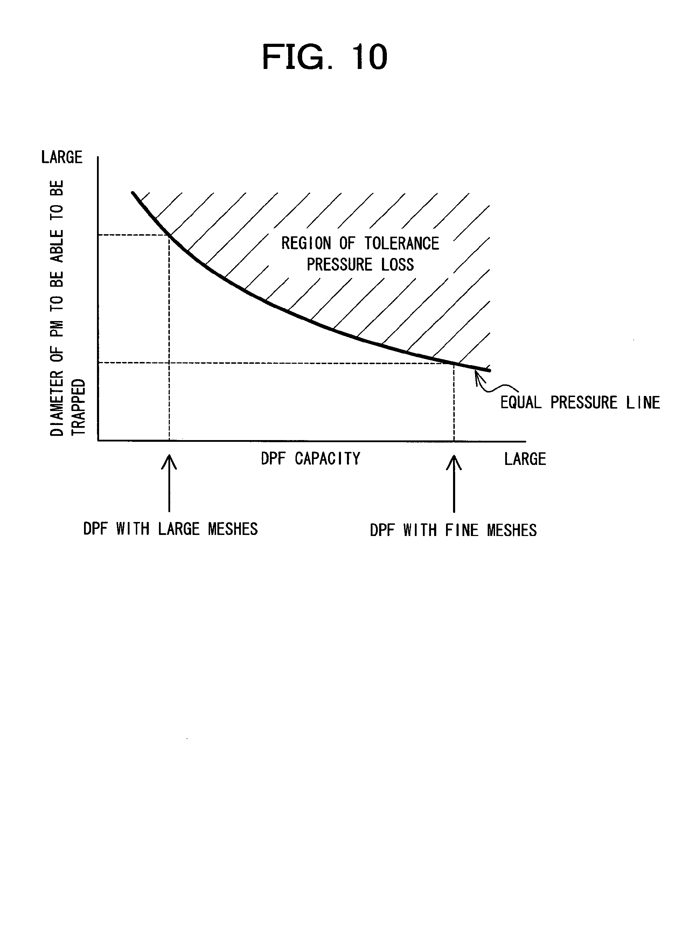

Accordingly in DPF 11a that can traps particulate matter in a large diameter, as seen in Fig. 9, when the pressure loss is small, and even if the pressure loss increases due to reducing a capacity of DPF 11a as seen in Fig. 8, a total pressure can be maintained at a certain level. As an equal pressure line of a tolerance pressure loss is shown by DPF 11a capacity and a diameter of the particulate matter to be able to be trapped as a parameter in Fig. 10, since in a case of DPF 11a the diameter of the particulate matter to be able to be trapped is large, DPF capacity can be reduced. Thereby a small capacity of DPF 11a can be used and a small space for receiving DPF 11a can be used, enabling positioning DPF 11a in the vicinity of engine 1 which has a small space.

On the other hand, DPF 12a with small mesh size that traps particulate matter in a relatively small diameter is positioned in a downstream side away from the vicinity of exhaust manifold 9 and DPF 11a in the upstream side traps the particulate matter in a large diameter. Therefore, since DPF 12a traps only the particulate matter in a small diameter that does not require a high temperature for its burning, it is not difficult to burn.

In DPF 12a with small mesh size having a small diameter, the flow resistance is large and the pressure loss increases. However, since due to increasing the capacity of DPF 12a, increase of the pressure loss can be controlled (Fig. 9) and there is enough space for DPF 12a, there is no problem for increasing the capacity thereof.

With reference to Fig. 10, in DPF 12a a tolerance pressure loss can be maintained to a certain level by increasing the DPF capacity corresponding to a particle diameter of the particle matter for trap being small. Although this increase of the DPF capacity requires more space, there is no problem with it because there is space for accommodating DPF 12a under a vehicle floor.

According to the embodiment, a particulate filter with large mesh size that traps particulate matter having a relatively large diameter is disposed in the vicinity of an exhaust manifold and on the other hand, a particulate filter with small mesh size that traps particulate matter having a relatively small diameter is dispose in a downstream side away from the vicinity of the exhaust manifold. Thereby the embodiment can provides an exhaust purification apparatus that has an excellent quality in terms of regeneration efficiency, pressure loss, and space of a particulate filter.

According to the embodiment, a particulate filter with large mesh size is disposed upstream of an exhaust gas turbine. Thereby regeneration efficiency thereof can be improved by making use of a high-temperature exhaust gas prior to a temperature decrease thereof caused by the exhaust gas turbine.

According to the embodiment, it is practical to position a particulate filter with large mesh size within an engine hood and position a particulate filter with small mesh size under a vehicle floor.

According to the embodiment, a capacity (V1) of a particulate filter with large mesh size having a small flow resistance is made small and a capacity of a particulate filter with small mesh size having a large flow resistance is made large (V2 ; V2 > V1). Thereby an increase of the pressure loss can be restrained.

According to the embodiment, each of a particulate filter with large mesh size and a particulate filter with small mesh size has a catalyst by which oxidization of HC and CO in the exhaust gas is promoted. Therefore, the particulate matter can be properly burned by using reaction heat thereof.

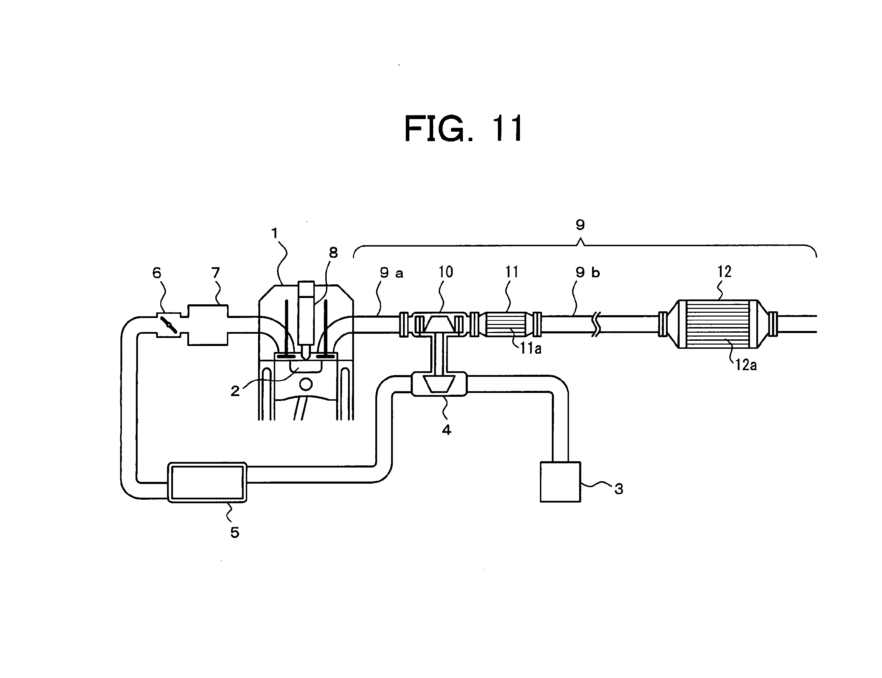

A second embodiment according to the invention will be explained with reference to Fig. 11a. In the first embodiment, DPF 11a is disposed upstream of exhaust gas turbine 10 whereby the regeneration efficiency of DPF 11a can be improved by making use of the high-temperature exhaust gas prior to the temperature decrease caused by exhaust gas turbine 10. However, there may be a little space upstream of exhaust gas turbine 10 and also a turbocharger performance may deteriorate if a distance between an engine and the turbocharger is lengthened.

Coping with the above problems, the second embodiment, as shown in Fig. 11a, DPF 11a is disposed immediately downstream of exhaust gas turbine 10. thereby regeneration efficiency of DPF 11a can be properly maintained by using a high-temperature exhaust gas as much as possible in a relatively spacious location without deteriorating a turbocharger performance.

In regard to an application of the second embodiment to a vehicle, in the same as the first embodiment as shown in Fig. 2, DPF 11a can be disposed in the engine hood and DPF 12a can be disposed under a vehicle floor.

This application claims priority to Japanese Patent Application No. 2002-106683 filed April 9, 2002. The entire disclosure of Japanese Patent Application No. 2002 - 106683 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims.

Furthermore, the foregoing description of the embodiments according to the present invention is provided for illustration only, and not for the purpose of limiting the invention as defined by the appended claims and their equivalents. Moreover, features of the different embodiments may be combined.

## Claims

1. An apparatus for purifying an exhaust gas in an engine comprising:
an exhaust passage (9) in the engine (1);
a first filter (11a) disposed in an upstream side of the exhaust passage (9), the first filter (11aa) trapping particulate matter that has at least a first diameter; and
a second filter (12a) disposed in a downstream side of the exhaust passage (9) and placed separately from the first filter (11a), the second filter (12a) trapping particulate matter that has at least a second diameter, the second diameter smaller than the first diameter.

2. An apparatus according to claim 1, further comprising:
a first casing (11a) containing the first filter (11a); and
a second casing (12a) containing the second filter (12a), the second casing (12a) separate from the first casing (11a).

3. An apparatus according to claim 1, wherein the first diameter is in the range of 80 - 100 nm.

4. An apparatus according to claim 1, wherein the second diameter is in the range of 20 - 50 nm.

5. An apparatus according to claim 1, wherein
the exhaust passage (9) comprises an exhaust manifold (9a) connected to a cylinder head of the engine (1) and an exhaust pipe (9b) downstream of the exhaust manifold (9a), further comprising:
an exhaust turbine (10) in a turbocharger disposed between the exhaust manifold (9a) and the exhaust pipe (9b) wherein,
the first filter (11a) is disposed upstream of the exhaust turbine (10).

6. An apparatus according to claim 1, further comprising:
the exhaust passage (9) comprises an exhaust manifold (9a) connected to a cylinder head of the engine (1) and an exhaust pipe (9b) downstream of the exhaust manifold (9a), further comprising:
an exhaust turbine (10) in a turbocharger disposed between the exhaust manifold (9a) and the exhaust pipe (9b) wherein,
the first filter (11a) is disposed downstream of the exhaust turbine (10).

7. An apparatus according to any of claim 1 - 6, wherein
the first filter (11a) is disposed under an engine hood; and
the second filter (12a) is disposed under a vehicle body floor.

8. An apparatus according to any of claim 1 - 7, wherein
a capacity of the first filter (11a) is less than a capacity of the second filter (12a).

9. An apparatus according to any of claim 1 - 8, wherein
each of the first (11a) and second filters (12a) carries a catalyst (25).

10. A method for purifying an exhaust gas in an engine comprising:
disposing a first filter (11a) in an upstream side of an exhaust passage (9); and
disposing a second filter (12a) in a downstream side of the exhaust passage (9) and placed separately from the first filter (11a) wherein
the first filter (11a) traps particulate matter having a larger diameter than the diameter of the particulate matter which the second filter (12a) traps.
